# EUROPEAN PATENT APPLICATION

(11) **EP 4 518 559 A1**
(43) Date of publication of application: **05.03.2025**
(21) Application number: 23818964.1
(22) Date of filing: 29.05.2023
(51) Int. Cl.: H04W 74/08, H04W 74/00

(54) **SIGNAL TRANSMISSION METHOD, APPARATUS AND SYSTEM**

(30) Priority: 10.06.2022 CN 202210654754
(71) Applicant: China Telecom Corporation Limited, Beijing 100033 (CN)
(72) Inventor: LI, Nanxi, Beijing 100033 (CN); ZHU, Jianchi, Beijing 100033 (CN); YIN, Hang, Beijing 100033 (CN); SHE, Xiaoming, Beijing 100033 (CN); CHEN, Peng, Beijing 100033 (CN)
(74) Representative: Reddie & Grose LLP
(86) International application number: PCT/CN2023/096825
(87) International publication number: WO 2023/236799

(57) **Abstract**

The present disclosure relates to the technical field of communications, and relates to a signal transmission method, apparatus and system. The transmission method comprises: configuring a binding relationship between different transmission occasions, the plurality of transmission occasions having the binding relationship being used for repeated transmission of a same signal; and delivering the binding relationship to a UE, so that the UE determines, according to the binding relationship, a transmission occasion for signal transmission.

## Description

### CROSS-REFERENCE TO RELATED APPLICATIONS

The present application is based on and claims the benefit of priority to Chinese Application No. 202210654754.3, filed on June 10, 2022, the disclosure of which is hereby incorporated into this application by reference herein in its entirety.

### TECHNICAL FIELD

This disclosure relates to the field of communication technology, in particular to a signal transmission method, a signal transmission apparatus, a signal transmission system, and a non-volatile computer-readable storage medium.

### BACKGROUND

According to the 3GPP NR Realease-17 protocols, a UE (User Equipment) transmits a preamble on a PRACH (Physical Random Access Channel) transmission occasion indicated by a base station.

In related arts, in a case where the UE determines that its PRACH transmission fails, the UE needs to repeat a new PRACH.

### SUMMARY

According to some embodiments of the present disclosure, there is provided a signal transmission method on a network side, comprising: configuring a bundling relationship between different transmission occasions, wherein a plurality of transmission occasions with the bundling relationship are used for a repetition of a same signal; and sending the bundling relationship to a UE(User Equipment) to enable the UE to determine a transmission occasion for a signal transmission based on the bundling relationship.

In some embodiments, the configuring the bundling relationship between different transmission occasions comprises: configuring the bundling relationship according to at least one of a time-domain position or a frequency-domain position corresponding to each transmission occasion of the plurality of transmission occasions and a SSB (synchronization signal block) associated with the each transmission occasion.

In some embodiments, the configuring the bundling relationship between different transmission occasions comprises: bundling transmission occasions associated with a same SSB.

In some embodiments, the bundling the transmission occasions associated with the same SSB comprises: bundling all or part of first transmission occasions, wherein the first transmission occasions correspond to a same time-domain position and are associated with the same SSB.

In some embodiments, the bundling the transmission occasions associated with the same SSB comprises: bundling all or part of second transmission occasions, wherein the second transmission occasions correspond to a same frequency-domain position and are associated with the same SSB.

In some embodiments, the configuring the bundling relationship between different transmission occasions comprises: configuring the bundling relationship between the different transmission occasions at a same temporal granularity.

In some embodiments, the temporal granularity comprises a time slot, a sub-frame or a system frame.

In some embodiments, the transmission method further comprises: performing a joint detection on signals received on the different transmission occasions with the bundling relationship; scrambling a scheduled RAR (random access response) according to a result of the joint detection; and sending a scrambled RAR to the UE to enable the UE to determine whether the signal transmission of the UE is successful based on whether the scrambled RAR is able to be descrambled.

In some embodiments, the performing the joint detection on the signals received on the different transmission occasions with the bundling relationship comprises: performing a joint Preamble detection on the signals received on the different transmission occasions with the bundling relationship.

In some embodiments, the scrambling the scheduled random access response (RAR) according to the result of the joint detection comprises: calculating a RA-RNTI (random access radio network temporary identifier) based on the result of the joint detection; scrambling DCI 1_0 (downlink control information 1_0) of the scheduled RAR; and adding a RAPID (Random Access Preamble Identifier) corresponding to the RA-RNTI to the scrambled RAR.

In some embodiments, the calculating the random access-radio network temporary identifier (RA-RNTI) based on the result of the joint detection comprises: calculating the RA-RNTI based on a time domain position and a frequency domain position of one transmission occasion of the different transmission occasions with the bundling relationship, in response to detecting that energy of a Preamble sequence is greater than a detection threshold.

In some embodiments, the one transmission occasion comprises a transmission occasion with the smallest index value or a transmission occasion with the largest index value in the different transmission occasions with the bundling relationship.

In some embodiments, the transmission occasion comprises a PRACH (physical random access channel) transmission occasion.

According to other embodiments of the present disclosure, there is provided a signal transmission method on a user side, comprising: receiving a bundling relationship between different transmission occasions configured on a network side, wherein a plurality of transmission occasions with the bundling relationship are used for a repetition of a same signal; and determining a transmission occasion for a signal transmission based on the bundling relationship.

In some embodiments, the determining the transmission occasion for the signal transmission based on the bundling relationship comprises: performing a signal repetition on the different transmission occasions with the bundling relationship and associated with a SSB (synchronization signal blocks) selected by a UE during a cell search.

In some embodiments, the determining the transmission occasion for the signal transmission based on the bundling relationship comprises: determining a beam used for the signal transmission on the different transmission occasions based on the bundling relationship.

In some embodiments, the bundling relationship comprises a first bundling relationship and a second bundling relationship, wherein the determining the beam used for the signal transmission on the different transmission occasions based on the bundling relationship comprises: performing the signal repetition using a first beam on different transmission occasions with the first bundling relationship, and performing the signal repetition using a second beam on different transmission occasions with the second bundling relationship, the first beam being different from the second beam; or performing the signal repetition using different beams on the different transmission occasions with the first bundling relationship.

In some embodiments, the transmission method further comprises: descrambling a scrambled RAR(random access response) sent from the network side; and determining whether the signal transmission is successful based on whether the scrambled RAR is able to be descrambled.

In some embodiments, the descrambling the scrambled RAR sent from the network side comprises: determining whether one RA-RNTI(random access radio network temporary identifier) or a plurality of RA-RNTIs are used to descramble DCI 1_0 (downlink control information 1_0) of a RAR based on whether the signal repetition is performed; and determining that the signal transmission is successful, in response to correctly identifying the RAPID(Random Access Preamble Identifier) in the RAR scheduled by the DCI 1_0.

In some embodiments, the determining whether the one RA-RNTI (random access radio network temporary identifier) or the plurality of RA-RNTIs are used to descramble the DCI 1_0 of the RAR based on whether the signal repetition is performed comprises: using the one RA-RNTI to descramble the DCI 1_0 of the RAR, in response to the signal repetition being not performed, the one RA-RNTI being calculated based on a time-domain position and a frequency-domain position of a transmission occasion on which the signal transmission is performed; using the plurality of RA-RNTIs to descramble the DCI 1_0 of the RAR, in response to the signal repetition being performed, the plurality of RA-RNTIs being calculated based on a time-domain position and a frequency-domain position of transmission occasions on which signal the repetition is performed.

According to still other embodiments of the present disclosure, there is provided a signal transmission apparatus on a network side, comprising: a configuration unit configured to configure a bundling relationship between different transmission occasions, wherein a plurality of transmission occasions with the bundling relationship are used for a repetition of a same signal; and a sending unit configured to send the bundling relationship to a UE(User Equipment) to enable the UE to determine a transmission occasion for a signal transmission based on the bundling relationship.

In some embodiments, the configuration unit configures the bundling relationship according to at least one of a time-domain position or a frequency-domain position corresponding to each transmission occasion of the plurality of transmission occasions and a SSB (synchronization signal blocks) associated with the each transmission occasion.

In some embodiments, the configuration unit binds transmission occasions associated with a same SSB.

In some embodiments, the configuration unit binds all or part of first transmission occasions, wherein the first transmission occasions correspond to a same time-domain position and are associated with the same SSB.

In some embodiments, the configuration unit binds all or part of second transmission occasions, wherein the second transmission occasions correspond to a same frequency-domain position and are associated with the same SSB.

In some embodiments, the configuration unit configures the bundling relationship between the different transmission occasions at a same temporal granularity.

In some embodiments, the temporal granularity comprises a time slot, a sub-frame or a system frame.

In some embodiments, the transmission apparatus further comprises: a detection unit configured to perform a joint detection on signals received on the different transmission occasions with the bundling relationship; a processing unit configured to scramble a scheduled RAR based on the result of the joint detection; and wherein the sending unit sends a scrambled RAR (random access response) to the UE to enable the UE to determine whether the signal transmission of the UE is successful based on whether the scrambled RAR is able to be descrambled.

In some embodiments, the detection unit performs a joint Preamble detection on the signals received on the different transmission occasions with the bundling relationship.

In some embodiments, the processing unit calculates a RA-RNTI (random access radio network temporary identifier) based on the result of the joint detection; scrambles DCI 1_0 (downlink control information 1_0) of the scheduled RAR; and adds a RAPID (Random Access Preamble Identifier) corresponding to the RA-RNTI to the scrambled RAR.

In some embodiments, processing unit calculates the RA-RNTI based on a time domain position and a frequency domain position of one transmission occasion of the different transmission occasions with the bundling relationship, in response to detecting that energy of a Preamble sequence is greater than a detection threshold.

In some embodiments, the one transmission occasion comprises a transmission occasion with the smallest index value or a transmission occasion with the largest index value in the different transmission occasions with the bundling relationship.

In some embodiments, the transmission occasion comprises a PRACH (physical random access channel) transmission occasion.

According to still other embodiments of the present disclosure, there is provided a signal transmission apparatus, comprising: a receiving unit for receiving a bundling relationship between different transmission occasions configured on a network side, wherein a plurality of transmission occasions with the bundling relationship are used for a repetition of a same signal; and a transmitting unit for determining a transmission occasions for a signal transmission based on the bundling relationship.

In some embodiments, the transmitting unit performs a signal repetition on the different transmission occasions with the bundling relationship and associated with a SSB(synchronization signal blocks) selected by a UE during a cell search.

In some embodiments, the transmitting unit determines a beam used for the signal transmission on the different transmission occasions based on the bundling relationship.

In some embodiments, the bundling relationship comprises a first bundling relationship and a second bundling relationship; the transmitting unit performs the signal repetition using a first beam on different transmission occasions with the first bundling relationship, and performing the signal repetition using a second beam on different transmission occasions with the second bundling relationship, the first beam being different from the second beam; or performs the signal repetition using different beams on the different transmission occasions with the first bundling relationship.

In some embodiments, the transmission apparatus further comprises: a processing unit configured to descramble a scrambled RAR(random access response) sent from the network side; and a determination unit configured to determine whether the signal transmission is successful based on whether the scrambled RAR is able to be descrambled.

In some embodiments, the processing unit determines whether one RA-RNTI or a plurality of RA-RNTIs are used to descramble DCI 1_0 of a RAR based on whether the signal repetition is performed; and the determination unit determines that the signal transmission is successful, in response to correctly identifying the RAPID in the RAR scheduled by the DCI 1_0.

In some embodiments, the processing unit uses the one RA-RNTI to descramble the DCI 1_0 of the RAR, in response to the signal repetition being not performed, the one RA-RNTI being calculated based on a time-domain position and a frequency-domain position of a transmission occasion on which the signal transmission is performed; and the processing unit uses the plurality of RA-RNTIs to descramble the DCI 1_0 of the RAR, in response to the signal repetition being performed, the plurality of RA-RNTIs being calculated based on a time-domain position and a frequency-domain position of transmission occasions on which signal the repetition is performed.

According to still other embodiments of the present disclosure, there is provided a signal transmission system, comprising: a network side device configured to carry out a signal transmission method on the network side according to any one of the above embodiments; and a UE (user equipment) configured to carry out a signal transmission method on a user side according to any one of the above embodiments.

According to still other embodiments of the present disclosure, there is provided a signal transmission apparatus, comprising: a memory; a processor coupled to the memory, the processor is configured to, based on instructions stored in the memory, carry out a signal transmission method on a network side or a signal transmission method on a user side according to any one of the above embodiments.

According to still other embodiments of the present disclosure, there is provided a nonvolatile computer readable storage medium stored thereon a computer program that, when executed by a processor, carries out a signal transmission method on a network side or a signal transmission method on a user side according to any one of the above embodiments.

According to further embodiments of the present disclosure, there is provided a computer program, comprising: instructions that, when executed by a processor, cause the processor to carry out a signal transmission method on a network side or a signal transmission method on a user side according to any one of the above embodiments.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 shows a flowchart of a signal transmission method on a network side according to some embodiments of the present disclosure;
FIGS. 2a to 2c show schematic diagrams of a bundling relationship between transmission occasions according to some embodiments of the present disclosure;
FIG. 3 shows a flowchart of a signal transmission method on a user side according to some embodiments of the present disclosure;
FIG. 4 shows a flowchart of a signal transmission method according to some embodiments of the present disclosure;
FIG. 5a shows a block diagram of a signal transmission apparatus on a network side according to some embodiments of the present disclosure;
FIG. 5b shows a block diagram of a signal transmission apparatus on a user side according to some embodiments of the present disclosure;
FIG. 6 shows a block diagram of a signal transmission apparatus according to some embodiments of the present disclosure;
FIG. 7 shows a block diagram of a signal transmission apparatus according to other embodiments of the present disclosure;
FIG. 8 shows a block diagram of a signal transmission system according to some embodiments of the present disclosure.

### DETAILED DESCRIPTION

Various exemplary embodiments of the present disclosure will now be described in detail with reference to the accompanying drawings. Notice that, unless otherwise specified, the relative arrangement, numerical expressions and values of the components and steps set forth in these embodiments do not limit the scope of the disclosure.

At the same time, it should be understood that, for ease of description, the dimensions of the various parts shown in the drawings are not drawn to actual proportions.

The following description of at least one exemplary embodiment is in fact merely illustrative and is in no way intended as a limitation to the disclosure, its application or use.

Techniques, methods, and devices known to those of ordinary skill in the relevant art may not be discussed in detail, but where appropriate, these techniques, methods, and devices should be considered as part of the specification.

Of all the examples shown and discussed herein, any specific value should be construed as merely illustrative and not as a limitation. Thus, other examples of exemplary embodiments may have different values.

Notice that, similar reference numerals and letters are denoted by the like in the accompanying drawings, and therefore, once an item is defined in a drawing, there is no need for further discussion in the accompanying drawings.

Based on the time-frequency position of a PRACH transmission occasion for sending a preamble, a UE can calculate a corresponding RA-RNTI value; the UE listens to a PDCCH within a RAR time window; if the UE successfully descrambles and detects DCI 1_0 using the RA-RNTI, and can identify a RAPID in RAR information scheduled by the DCI, then the UE considers its PRACH transmission to be successful.

The inventors of the present disclosure have found the following problems existed in the related art: PRACH repetition is not supported, resulting in additional delay and poor signal coverage.

In view of this, this disclosure proposes a signal transmission technical solution that supports signal repetition, thereby reducing delay and improving signal coverage.

As mentioned above, the current protocol versions do not support PRACH repetition. Therefore, in a case where a UE considers that its PRACH transmission fails, the UE needs to transmit a new PRACH again, which results in additional delay. In addition, for high frequency bands, PRACH is a potential coverage limited channel, so it is necessary to improve the coverage performance of PRACH.

In view of the above technical problems, this disclosure proposes a resource configuration technical solution for PRACH repetition, which may facilitate an enhanced UE to perform multibeam repetition of PRACH, thereby improving the coverage performance of PRACH.

For example, the technical solution of the present disclosure can be realized through the following embodiments.

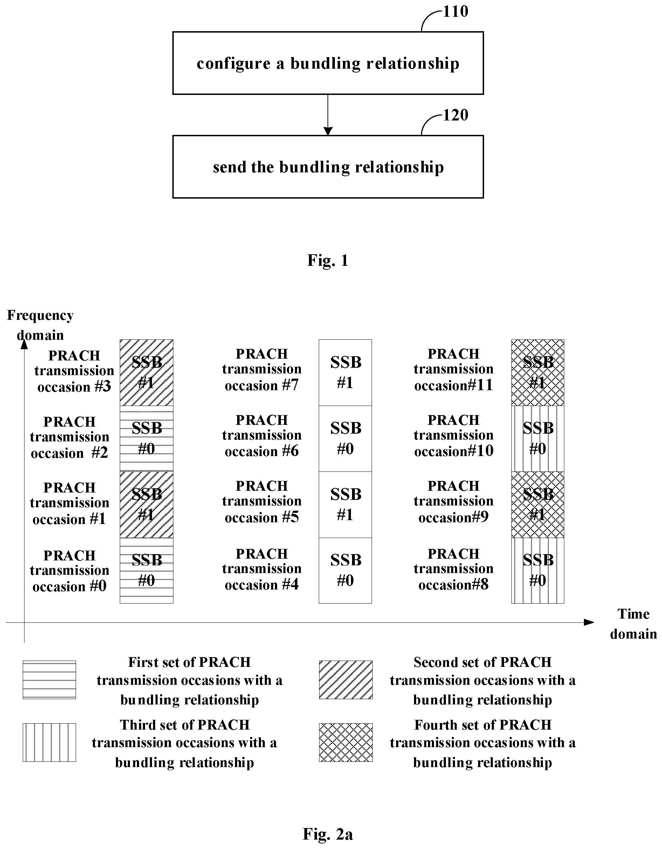

FIG. 1 shows a flowchart of a signal transmission method on a network side according to some embodiments of the present disclosure.

As shown in FIG. 1, in step 110, a bundling relationship between different transmission occasions is configured, wherein a plurality of transmission occasions with the bundling relationship are used for repetition of the same signal. For example, the transmission occasions comprises PRACH transmission occasions. For example, the transmission occasions may be ROs (Random Access Channel Occasion). A plurality of available ROs can be bound as a RO set, which is used for multi PRACH transmission, which may comprise repetition of the same signal.

For example, the network side can configure a bundling relationship between PRACH transmission occasions via RRC (Radio Resource Control) signaling.

In some embodiments, the bundling relationship is configured according to at least one of a time-domain position or a frequency-domain position corresponding to each transmission occasion of the transmission occasions and a SSB associated with the each transmission occasion. For example, transmission occasions associated with the same SSB are bound together.

For example, all or part of first transmission occasions are bound together, wherein the first transmission occasions correspond to the same time-domain position and are associated with the same SSB.

For example, all or part of second transmission occasions are bound together, wherein the second transmission occasions correspond to the same frequency-domain position and are associated with the same SSB.

For example, the bundling relationship between different PRACH transmission occasions comprises at least one of: no bundling relationship; a bundling relationship between part or all PRACH transmission occasions at the same time-domain symbol position and associated with the same SSB; a bundling relationship between part or all PRACH transmission occasions at the same frequency-domain position and associated with the same SSB; a bundling relationship between PRACH transmission occasions at part or all time-domain symbol positions or part or all frequency-domain positions and associated with the same SSB.

FIGS. 2a to 2c show schematic diagrams of a bundling relationship between transmission occasions according to some embodiments of the present disclosure.

As shown in FIG. 2a, a bundling relationship is formed between part or all PRACH transmission occasions at the same time-domain symbol position and associated with the same SSB.

For example, PRACH transmission occasions #0 and #2, which are associated with SSB #0 and are at the same time-domain position, have a bundling relationship; PRACH transmission occasions #1 and #3, which are associated with SSB #1 and are at the same time-domain position, have a bundling relationship; PRACH transmission occasions #8 and #10, which are associated with SSB #0 and are at the same time-domain position, have a bundling relationship; PRACH transmission occasions #9 and #11, which are associated with SSB #1 and are at the same time-domain position, have a bundling relationship.

In addition, there is no bundling relationship between PRACH transmission occasions #4~# 7.

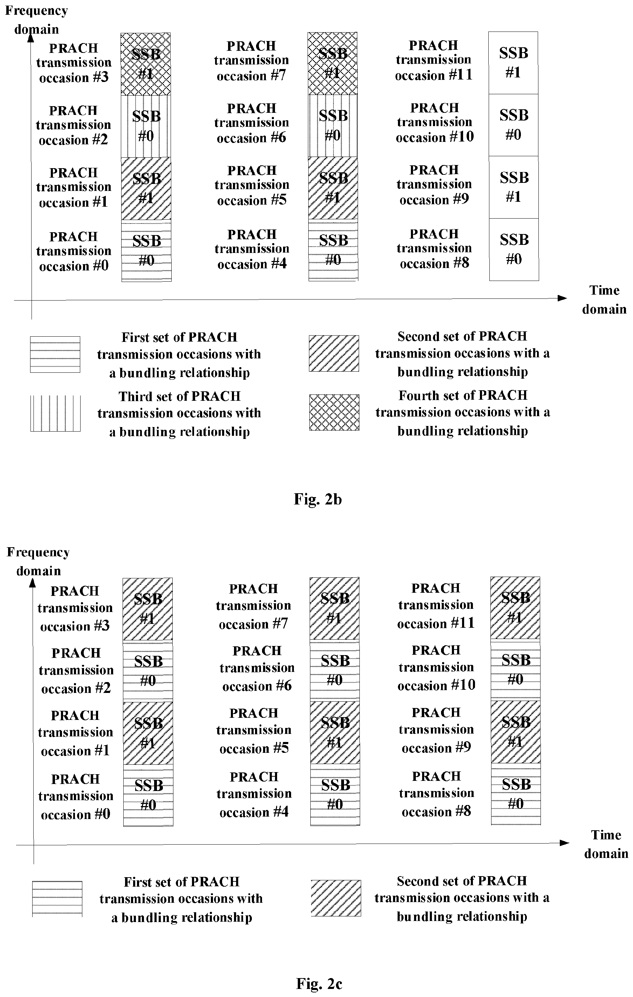

As shown in FIG. 2b, a bundling relationship is formed between part or all PRACH transmission occasions that are at the same frequency-domain position and are associated with the same SSB.

For example, PRACH transmission occasions #0 and #4, which are associated with SSB #0 and are at the same frequency-domain position, have a bundling relationship; PRACH transmission occasions #1 and #5, which are associated with SSB #1 and are at the same frequency-domain position, have a bundling relationship; PRACH transmission occasions #2 and #6, which are associated with SSB #0 and are at the same frequency-domain position, have a bundling relationship; PRACH transmission occasions #3 and #7, which are associated with SSB #1 and are at the same frequency-domain position, have a bundling relationship.

In addition, there is no bundling relationship between PRACH transmission occasions #8~#11.

As shown in FIG. 2c, a bundling relationship is formed between PRACH transmission occasions that are at part or all time-domain symbol and part or all frequency-domain positions and are associated with the same SSB.

For example, PRACH transmission occasions #0, #4, #8, #2, #6, #10, which are associated with SSB #0, have a bundling relationship; PRACH transmission occasions #1, #5, #9, #3, #7, #11, which are associated with SSB #1, have a bundling relationship.

In some embodiments, a bundling relationship is configured between different transmission occasions at the same temporal granularity. For example, the temporal granularity comprises a time slot, a sub-frame, or a system frame.

In some embodiments, the bundling relationship is only configured for PRACH transmission occasions at the same temporal granularity. For example, in response to the temporal granularity being a time slot, there is no bundling relationship between PRACH transmission occasions across time slots.

For example, the temporal granularity at which a bundling relationship can be formed between PRACH transmission occasions is at least one of a time slot, a sub-frame, or a system frame.

After the bundling relationship is configured, signal transmission can be performed through the remaining steps in FIG. 1.

In step 120, the bundling relationship is sent to a UE to enable the UE to determine transmission occasions for signal transmission based on the bundling relationship.

In some embodiments, a joint detection is performed on signals received on the different transmission occasions with the bundling relationship; a scheduled RAR is scrambled based on the result of the joint detection; the scrambled RAR is sent to the UE to enable the UE to determine whether the signal transmission of the UE is successful based on whether the scrambled RAR can be descrambled.

For example, based on a bundling relationship between PRACH transmission occasions, the network side performs a joint PRACH detection on PRACH transmissions with the same bundling relationship; calculates a RA-RNTI based on the result of the PRACH detection; scrambles DCI 1_0 of a RAR scheduled; puts a corresponding RAPID into the RAR information.

In some embodiments, a joint Preamble detection is performed on signals received on the different transmission occasions with the bundling relationship.

In some embodiments, a RA-RNTI is calculated according to the result of the joint detection; the DCI 1_0 of a RAR scheduled is scrambled; a RAPID corresponding to the RA-RNTI is added to the scrambled RAR.

For example, the network side performs a joint process on signals received on PRACH transmission occasions with the same bundling relationship to perform a Preamble detection; calculates a corresponding RA-RNTI value based on the result of the Preamble detection.

In some embodiments, a RA-RNTI is calculated based on a time-domain position and a frequency-domain position of one transmission occasion of different transmission occasions with the bundling relationship, in response to detecting that energy of a Preamble sequence is greater than a detection threshold.

For example, a RA-RNTI value is calculated based on a time resource position and a frequency resource position of a specified PRACH transmission occasion among the PRACH transmission occasions with the same bundling relationship, in response to detecting that energy of a Preamble sequence is greater than a detection threshold. A corresponding RAPID is added to the RAR information.

In some embodiments, the one transmission occasion comprises a transmission occasion with the smallest index value or a transmission occasion with the largest index value among the different transmission occasions with a bundling relationship. For example, the transmission occasions comprises PRACH transmission occasions.

For example, the specified PRACH transmission occasion may comprise a PRACH transmission occasion with the smallest index value, a PRACH transmission occasion with the largest index value, or any PRACH transmission occasion.

In the above embodiments, the network side configures a bundling relationship between a plurality of transmission occasions, and the UE performs signal repetition using the plurality of transmission occasions bound. In this way, signal repetition can be supported, and thus reducing delay and improving signal coverage.

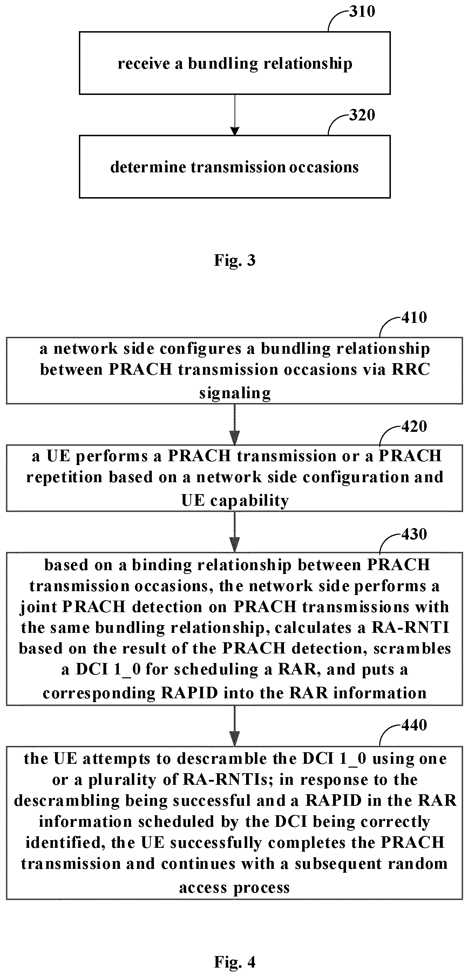

FIG. 3 shows a flowchart of a signal transmission method on a user side according to some embodiments of the present disclosure.

As shown in FIG. 3, in step 310, a bundling relationship between different transmission occasions configured on a network side is received, wherein a plurality of transmission occasions with the bundling relationship are used for repetition of the same signal.

In step 320, a transmission occasion for a signal transmission is determined based on the bundling relationship. For example, a UE performs PRACH transmission or PRACH repetition based on the bundling relationship configured on the network side.

In some embodiments, transmission occasions with a bundling relationship are bound as a set of transmission occasions; signal repetition is performed for the same signal using one or more sets of transmission occasions with a bundling relationship.

For example, transmission occasions #0 and #2 have a first bundling relationship, and a signal needs to be repeated twice. In this case, the signal can be repeated twice using transmission occasions #0 and #2.

For example, transmission occasions #0 and #2 have a first bundling relationship, transmission occasions #8 and #10 have a second bundling relationship, and a signal needs to be repeated four times. In this case, the signal can be repeated four times using transmission occasions #0, #2, #8 and #10.

In some embodiments, the repetition of the same signal is performed using part or all of the transmission occasions in a set of transmission occasions with a bundling relationship.

For example, transmission occasions #0, #2, #8, #10 have a bundling relationship, and a signal needs to be repeated three times. In this case, the signal can be repeated three times using three transmission occasions among the transmission occasions #0, #2, #8 and #10.

In some embodiments, for a UE that does not support PRACH repetition, PRACH transmission is directly performed based on the network side configuration without being affected by the bundling relationship of PRACH transmission occasions. For example, the network side configuration comprises one or more of: time-domain positions and frequency-domain positions of PRACH transmission occasions, Preamble indexes available for PRACH transmissions, subcarrier spacing of Preambles, etc.

In some embodiments, for a UE supporting PRACH repetition, in response to there being no bundling relationship between the PRACH transmission occasions, only PRACH transmission is performed based on the above network side configuration, without PRACH repetition. In response to the PRACH transmission occasions have a bundling relationship as described above, PRACH repetition is performed on the PRACH transmission occasions that have the bundling relationship.

In some embodiments, signal repetition is performed on different transmission occasions that have a bundling relationship and are associated with an SSB selected by the UE during cell search.

For example, the UE performs a transmission on transmission occasions that have a bundling relationship and are associated with an SSB selected by the UE during cell search.

For example, as shown in FIG. 2a, the SSB index selected by the UE during cell search is #1 and the number of PRACH repetitions is 4, then the UE performs PRACH repetitions on PRACH transmission occasions #1, #3, #9, and #11.

In some embodiments, beams used for signal transmission on the different transmission occasions are determined based on the bundling relationship.

For example, the bundling relationship comprises a first bundling relationship and a second bundling relationship. Signal repetition is performed using a first beam on different transmission occasions with the first bundling relationship, and signal repetition is performed using a second beam on different transmission occasions with the second bundling relationship, the first beam being different from the second beam; or signal repetition is performed using different beams on different transmission occasions with the first bundling relationship.

For example, the UE performs PRACH transmission using the same beam on PRACH transmission occasions having the same bundling relationship, and performs PRACH transmission using the different beams on PRACH transmission occasions having different bundling relationships.

For example, the UE performs PRACH transmission using different beams on PRACH transmission occasions with the same bundling relationship.

In some embodiments, a scrambled RAR sent from the network side is descrambled; whether the signal transmission is successful is determined based on whether the scrambled RAR can be descrambled.

For example, the UE attempts to descramble the DCI 1_0 using one or a plurality of RA-RNTIs; In response to the descrambling process being successful and a RAPID in the RAR information scheduled by the DCI being correctly identified, the UE successfully completes the PRACH transmission and continues with a subsequent random access process; in response to the descrambling process failing, the UE needs to repeat a new PRACH.

In some embodiments, at least one RA-RNTI is used to descramble the DCI 1_0 of the RAR, the RA-RNTI being calculated based on a time-domain position and a frequency-domain position of a transmission occasion for a signal transmission; the signal transmission is successful in response to correctly identifying the RAPID in the RAR scheduled by the DCI 1_0.

For example, for a UE supporting PRACH repetition, in response to no PRACH repetition being performed by the UE, one RA-RNTI is used to descramble the DCI 1_0. The RA-RNTI is obtained by calculation based on a time resource position and a frequency resource position of a PRACH transmission occasion on which PRACH transmission is performed by the UE.

For example, for a UE supporting PRACH repetition, in response to PRACH repetition being performed by the UE, a plurality of RA-RNTIs are used to descramble the DCI 1_0. The plurality of RA-RNTIs are obtained by calculation based on time resource positions and frequency resource positions of PRACH transmission occasions on which PRACH repetition is performed by the UE.

FIG. 4 shows a flowchart of a signal transmission method according to some embodiments of the present disclosure.

As shown in FIG. 4, in step 410, a network side configures a bundling relationship between PRACH transmission occasions via RRC signaling.

In some embodiments, the temporal granularity of a bundling relationship between PRACH transmission occasions is at least one of a time slot, a sub-frame, or a system frame.

In some embodiments, a bundling relationship is only configured for PRACH transmission occasions within a temporal granularity. For example, in response to the temporal granularity being a time slot, there is no bundling relationship between PRACH transmission occasions across time slots.

In some embodiments, the bundling relationship between PRACH transmission occasions comprises at least one of: no bundling relationship; a bundling relationship between part or all PRACH transmission occasions at the same time-domain symbol position and associated with the same SSB; a bundling relationship between part or all PRACH transmission occasions at the same frequency-domain position and associated with the same SSB; a bundling relationship between PRACH transmission occasions at part time-domain symbol positions or part frequency-domain positions and associated with the same SSB.

In step 420, a UE performs a PRACH transmission or a PRACH repetition based on a network side configuration.

In some embodiments, for a first type of UE, a PRACH transmission is directly performed based on the network side configuration without being affected by the bundling relationship of PRACH transmission occasions. The network side configuration comprises one or more of: time-domain positions and frequency-domain positions of PRACH transmission occasions, preamble indexes available for PRACH transmissions, subcarrier spacing of preambles, etc. For example, the first type of UE comprises a UE not supporting PRACH repetition.

In some embodiments, for a second type of UE, in response to no bundling relationship between the PRACH transmission occasions, only a PRACH transmission is performed based on a network side configuration, without PRACH repetition. In response to the PRACH transmission occasions have a bundling relationship as described above, a PRACH repetition is performed on the PRACH transmission occasions with the bundling relationship. For example, the second type of UE comprises a UE supporting a PRACH repetition.

In some embodiments, the UE performs transmission on PRACH transmission occasions with a bundling relationship and are associated with an SSB selected by the UE during a cell search. For example, as shown in FIG. 2a, the SSB index selected by the UE during the cell search is #1 and the number of PRACH repetitions is 4, then the UE performs PRACH repetitions on PRACH transmission occasions #1, #3, #9, and #11.

In some embodiments, the UE performs a PRACH transmission on PRACH transmission occasions with the same bundling relationship using the same beam, and performs a PRACH transmission at PRACH transmission occasions with different bundling relationships using different beams.

In some embodiments, the UE performs a PRACH transmission using different beams on PRACH transmission occasions with the same bundling relationship.

In step 430, based on a bundling relationship between PRACH transmission occasions, the network side performs a joint PRACH detection on PRACH transmissions with the same bundling relationship; calculates a RA-RNTI based on the result of the PRACH detection; scrambles a DCI 1_0 of a RAR scheduled, and puts a corresponding RAPID into the RAR information.

In some embodiments, the network side performs a joint process on signals received on PRACH transmission occasions with the same bundling relationship to perform a Preamble detection; calculates a corresponding RA-RNTI value based on the result of detection.

In some embodiments, a RA-RNTI value is calculated based on a time resource position and a frequency resource position of a specified PRACH transmission occasion among the PRACH transmission occasions with the same bundling relationship, in response to detecting that energy of a Preamble sequence is greater than a detection threshold; a corresponding RAPID is added to the RAR information.

In some embodiments, the specified PRACH transmission occasion comprises: a PRACH transmission occasion with the smallest index value, a PRACH transmission occasion with the largest index value, or any PRACH transmission occasion.

In step 440, the UE attempts to descramble the DCI 1_0 using one or a plurality of RA-RNTIs; in response to the descrambling is successful and a RAPID in the RAR information scheduled by the DCI can be correctly identified, the UE successfully completes the PRACH transmission and continues with a subsequent random access process.

In some embodiments, for the second type of UE, in response to no PRACH repetition being performed by the UE, the one RA-RNTI is used to descramble the DCI 1_0. The RA-RNTI is obtained by calculation based on a time resource position and a frequency resource position of a PRACH transmission occasion on which PRACH transmission is performed by the UE.

In some embodiments, for the second type of UE, in response to a PRACH repetition being performed by the UE, the plurality of RA-RNTIs are used to descramble the DCI 1_0. The plurality of RA-RNTIs are obtained by calculation based on time resource positions and frequency resource positions of PRACH transmission occasions on which PRACH repetition is performed by the UE.

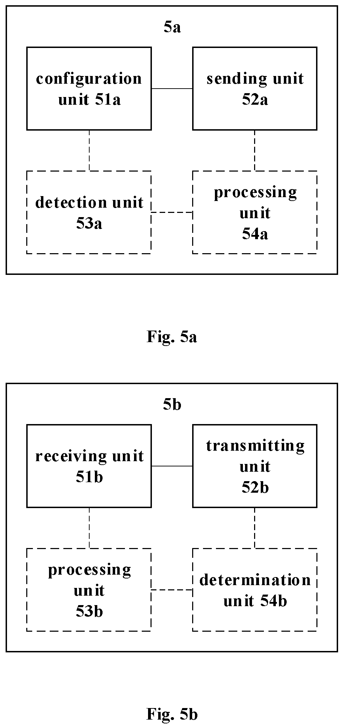

FIG. 5a shows a block diagram of a signal transmission apparatus on a network side according to some embodiments of the present disclosure.

As shown in FIG. 5a, a signal transmission apparatus 5a comprises: a configuration unit 51a for configuring a bundling relationship between different transmission occasions, wherein a plurality of transmission occasions with a bundling relationship are used for repetition of the same signal; a sending unit 52a for sending the bundling relationship to a UE to enable the UE to determine transmission occasions for signal transmission based on the bundling relationship.

In some embodiments, the configuration unit 51a configures the bundling relationship according to at least one of time-domain positions or frequency-domain positions corresponding to each transmission occasion of the transmission occasions and SSBs associated with the each transmission occasions.

In some embodiments, the configuration unit 51a binds transmission occasions that are associated with the same SSB.

In some embodiments, the configuration unit 51a binds all or part of first transmission occasions, wherein the first transmission occasions correspond to the same time-domain position and are associated with the same SSB.

In some embodiments, the configuration unit 51a binds all or part of second transmission occasions, wherein the second transmission occasions correspond to the same frequency-domain position and are associated with the same SSB.

In some embodiments, the configuration unit 51a configures a bundling relationship between different transmission occasions at the same temporal granularity.

In some embodiments, the temporal granularity comprises a time slot, a sub-frame, or a system frame.

In some embodiments, the transmission apparatus 5a further comprises: a detection unit 53a for performing a joint detection on signals received on the different transmission occasions with the bundling relationship; a processing unit 54a for scrambling a scheduled RAR based on the result of the joint detection; wherein the sending unit sends the scrambled RAR to the UE to enable the UE to determine whether the signal transmission of the UE is successful based on whether the scrambled RAR can be descrambled.

In some embodiments, the detection unit 53a performs a joint Preamble detection on signals received on the different transmission occasions with the bundling relationship.

In some embodiments, the processing unit 54a calculates a RA-RNTI according to the result of the joint detection; scrambles a DCI 1_0 of the scheduled RAR, and adds a RAPID corresponding to the RA-RNTI to the scrambled RAR.

In some embodiments, if the processing unit 54a detects that energy of a Preamble sequence is greater than a detection threshold, a RA-RNTI is calculated based on a time-domain position and a frequency-domain position of one transmission occasion of different transmission occasions with the bundling relationship.

In some embodiments, the one transmission occasion comprises a transmission occasion with the smallest index value or a transmission occasion with the largest index value among the different transmission occasions with a bundling relationship.

In some embodiments, the transmission occasion comprises a PRACH transmission occasion.

FIG. 5b shows a block diagram of a signal transmission apparatus on a user side according to some embodiments of the present disclosure.

As shown in FIG. 5b, a signal transmission apparatus 5b comprises: a receiving unit 51b for receiving a bundling relationship between different transmission occasions configured on a network side, wherein a plurality of transmission occasions with a bundling relationship are used for repetition of the same signal; a transmitting unit 52b for determining transmission occasions for signal transmission based on the bundling relationship.

In some embodiments, the transmitting unit 52b performs signal repetition on different transmission occasions that have a bundling relationship and are associated with an SSB selected by the UE during cell search.

In some embodiments, the transmitting unit 52b determines beams used for signal transmission on the different transmission occasions based on the bundling relationship.

In some embodiments, the bundling relationship comprises a first bundling relationship and a second bundling relationship. The transmitting unit 52b performs signal repetition using a first beam on different transmission occasions with the first bundling relationship, and performs signal repetition using a second beam on different transmission occasions with the second bundling relationship, the first beam being different from the second beam; or performs signal repetition using different beams on different transmission occasions with the first bundling relationship.

In some embodiments, the transmission apparatus 5b further comprises: a processing unit 53b for descrambling a scrambled RAR sent from a network side; a determination unit 54b for determining whether the signal transmission is successful based on whether the scrambled RAR can be descrambled.

In some embodiments, the processing unit 53b determines whether one or a plurality of RA-RNTIs are used to descramble a DCI 1_0 of the RAR based on whether signal repetition is performed; the determination unit 54b determines that the signal transmission is successful in response to correctly identifying the RAPID in the RAR scheduled by the DCI 1_0.

In some embodiments, the processing unit 53b uses one RA-RNTI to descramble the DCI 1_0 of the RAR in response to performing no signal repetition, the one RA-RNTI being calculated based on a time-domain position and a frequency-domain position of a transmission occasion on which signal transmission is performed; the processing unit 53b descrambles the DCI 1_0 of the RAR using a plurality of RA-RNTIs in response to performing the signal repetition, the plurality of RA-RNTIs being calculated based on time-domain positions and frequency-domain positions of transmission occasions on which signal repetition is performed.

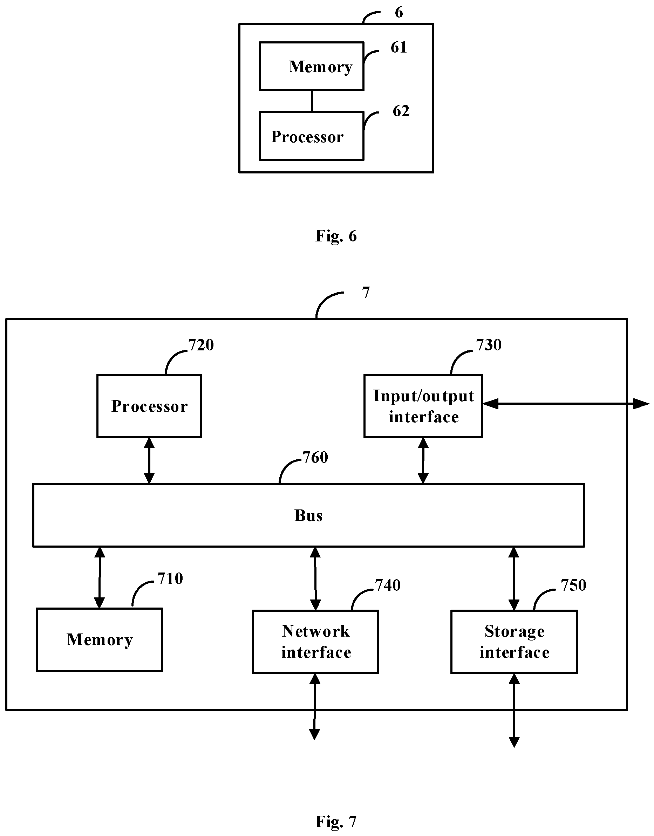

FIG. 6 shows a block diagram of a signal transmission apparatus according to some embodiments of the present disclosure.

As shown in FIG. 6, the signal transmission apparatus of the embodiment comprises: a memory 61 and a processor 62 coupled to the memory 61, the processor 62 configured to, based on instructions stored in the memory 61, carry out the signal transmission method on a network side or the signal transmission method on a user side provided by any one of the embodiments of the present disclosure.

Wherein, the memory 61 may comprise, for example, a system memory, a fixed non-volatile storage medium, or the like. The system memory stores, for example, an operating system, applications, a boot loader, a database, and other programs.

FIG. 7 shows a block diagram of a signal transmission apparatus according to other embodiments of the present disclosure;

As shown in FIG. 7, the signal transmission apparatus 7 of the embodiment comprises: a memory 710 and a processor 720 coupled to the memory 710, the processor 720 is configured to, based on instructions stored in the memory 710, carry out the signal transmission method on a network side or the signal transmission method on a user side provided by any one of the embodiments of the present disclosure.

The memory 710 may comprise, for example, a system memory, a fixed non-volatile storage medium, or the like. The system memory stores, for example, an operating system, application programs, a boot loader, and other programs.

The signal transmission apparatus 7 may further comprise an input-output interface 730, a network interface 740, a storage interface 750, and the like. These interfaces 730, 740, 750, and between the memory 710 and the processor 720 may be connected through a bus 760, for example. Wherein, the input-output interface 730 provides a connection interface for input-output devices such as a display, a mouse, a keyboard, a touch screen, a microphone, a loudspeaker, etc. The network interface 740 provides a connection interface for various networked devices. The storage interface 750 provides a connection interface for external storage devices such as an SD card and a USB flash disk.

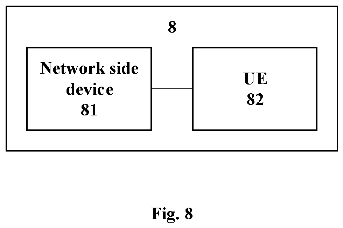

FIG. 8 shows a block diagram of a signal transmission system according to some embodiments of the present disclosure.

As shown in FIG. 8, the signal transmission system 8 comprises: a network side device 81 for carrying out the signal transmission method on the network side according to any one of the above embodiments; a user equipment (UE) 82 for carrying out the signal transmission method on a user side according to any one of the above embodiments.

Those skilled in the art should understand that the embodiments of the present disclosure may be provided as a method, a system, or a computer program product. Therefore, embodiments of the present disclosure can take the form of an entirely hardware embodiment, an entirely software embodiment or an embodiment containing both hardware and software aspects. Moreover, the present disclosure may take the form of a computer program product embodied on one or more computer-usable non-transitory storage media (including but not limited to disk memory, CD-ROM, optical memory, etc.) having computer-usable program code embodied therein.

Heretofore, a signal transmission method, a signal transmission apparatus, a signal transmission system, a non-volatile computer readable storage medium and a computer program according to the present disclosure have been described in detail. In order to avoid obscuring the concepts of the present disclosure, some details known in the art are not described. Based on the above description, those skilled in the art can understand how to implement the technical solutions disclosed herein.

The method and system of the present disclosure may be implemented in many ways. For example, the method and system of the present disclosure may be implemented by software, hardware, firmware, or any combination of software, hardware, and firmware. The above sequence of steps of the method is merely for the purpose of illustration, and the steps of the method of the present disclosure are not limited to the above-described specific order unless otherwise specified. In addition, in some embodiments, the present disclosure may also be implemented as programs recorded in a recording medium, which comprise machine-readable instructions for implementing the method according to the present disclosure. Thus, the present disclosure also covers a recording medium storing programs for executing the method according to the present disclosure.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified without departing from the scope and spirit of the present disclosure. The scope of the disclosure is defined by the following claims.

## Claims

1. A signal transmission method, comprising:
configuring a bundling relationship between different transmission occasions, wherein a plurality of transmission occasions with the bundling relationship are used for a repetition of a same signal; and
sending the bundling relationship to a UE(User Equipment) for the UE to determine a transmission occasion for a signal transmission based on the bundling relationship.

2. The transmission method according to claim 1, wherein the configuring the bundling relationship between different transmission occasions comprises:
configuring the bundling relationship according to at least one of a time-domain position or a frequency-domain position corresponding to each transmission occasion of the plurality of transmission occasions and a SSB (synchronization signal block) associated with the each transmission occasion.

3. The transmission method according to claim 2, wherein the configuring the bundling relationship between different transmission occasions comprises:
bundling transmission occasions associated with a same SSB.

4. The transmission method according to claim 3, wherein the bundling the transmission occasions associated with the same SSB comprises:
bundling all or part of first transmission occasions, wherein the first transmission occasions correspond to a same time-domain position and are associated with the same SSB.

5. The transmission method according to claim 3 or 4, wherein the bundling the transmission occasions associated with the same SSB comprises:
bundling all or part of second transmission occasions, wherein the second transmission occasions correspond to a same frequency-domain position and are associated with the same SSB.

6. The transmission method according to any one of claims 1 to 5, wherein the configuring the bundling relationship between different transmission occasions comprises:
configuring the bundling relationship between the different transmission occasions at a same temporal granularity.

7. The transmission method according to claim 6, wherein the temporal granularity comprises a time slot, a sub-frame or a system frame.

8. The transmission method according to any one of claims 1 to 7, further comprising:
performing a joint detection on signals received on the different transmission occasions with the bundling relationship;
scrambling a scheduled RAR (random access response) according to a result of the joint detection; and
sending a scrambled RAR to the UE for the UE to determine whether the signal transmission of the UE is successful based on whether the scrambled RAR is able to be descrambled.

9. The transmission method according to claim 8, wherein the performing the joint detection on the signals received on the different transmission occasions with the bundling relationship comprises:
performing a joint Preamble detection on the signals received on the different transmission occasions with the bundling relationship.

10. The transmission method according to claim 8 or 9, wherein the scrambling the scheduled random access response (RAR) according to the result of the joint detection comprises:
calculating a RA-RNTI (random access radio network temporary identifier) based on the result of the joint detection;
scrambling DCI 1_0 (downlink control information 1_0) of the scheduled RAR; and
adding a RAPID (Random Access Preamble Identifier) corresponding to the RA-RNTI to the scrambled RAR.

11. The transmission method according to claim 10, wherein the calculating the random access-radio network temporary identifier (RA-RNTI) based on the result of the joint detection comprises:
calculating the RA-RNTI based on a time domain position and a frequency domain position of one transmission occasion of the different transmission occasions with the bundling relationship, in response to detecting that energy of a Preamble sequence is greater than a detection threshold.

12. The transmission method according to claim 11, wherein the one transmission occasion comprises a transmission occasion with the smallest index value or a transmission occasion with the largest index value in the different transmission occasions with the bundling relationship.

13. The transmission method according to any one of claims 1 to 12, wherein the transmission occasion comprises a PRACH (physical random access channel) transmission occasion.

14. A signal transmission method, comprising:
receiving a bundling relationship between different transmission occasions configured by a network side, wherein a plurality of transmission occasions with the bundling relationship are used for a repetition of a same signal; and
determining transmission occasions for a signal transmission based on the bundling relationship.

15. The transmission method according to claim 14, wherein the determining the transmission occasion for the signal transmission based on the bundling relationship comprises:
performing a signal repetition on the different transmission occasions with the bundling relationship and associated with a SSB (synchronization signal blocks) selected by a UE during a cell search.

16. The transmission method according to claim 14 or 15, wherein the determining the transmission occasion for the signal transmission based on the bundling relationship comprises:
determining a beam used for the signal transmission on the different transmission occasions based on the bundling relationship.

17. The transmission method according to claim 16, wherein the bundling relationship comprises a first bundling relationship and a second bundling relationship,
wherein the determining the beam used for the signal transmission on the different transmission occasions based on the bundling relationship comprises:
performing the signal repetition using a first beam on different transmission occasions with the first bundling relationship, and performing the signal repetition using a second beam on different transmission occasions with the second bundling relationship, the first beam being different from the second beam; or
performing the signal repetition using different beams on the different transmission occasions with the first bundling relationship.

18. The transmission method according to any one of claims 14 to 17, further comprising:
descrambling a scrambled RAR(random access response) sent from the network side; and
determining whether the signal transmission is successful based on whether the scrambled RAR is able to be descrambled.

19. The transmission method according to claim 18, wherein the descrambling the scrambled RAR sent from the network side comprises:
determining whether one RA-RNTI (random access radio network temporary identifier) or a plurality of RA-RNTIs are used to descramble DCI 1_0 (downlink control information 1_0) of a RAR based on whether the signal repetition is performed; and
determining that the signal transmission is successful, in response to correctly identifying the RAPID (Random Access Preamble Identifier) in the RAR scheduled by the DCI 1_0.

20. The transmission method according to claim 19, wherein the determining whether the one RA-RNTI (random access radio network temporary identifier) or the plurality of RA-RNTIs are used to descramble the DCI 1_0 of the RAR based on whether the signal repetition is performed comprises:
using the one RA-RNTI to descramble the DCI 1_0 of the RAR, in response to the signal repetition being not performed, the one RA-RNTI being calculated based on a time-domain position and a frequency-domain position of a transmission occasion on which the signal transmission is performed; and
using the plurality of RA-RNTIs to descramble the DCI 1_0 of the RAR, in response to the signal repetition being performed, the plurality of RA-RNTIs being calculated based on a time-domain position and a frequency-domain position of transmission occasions on which signal the repetition is performed.

21. A signal transmission apparatus, comprising:
a configuration unit configured to configure a bundling relationship between different transmission occasions, wherein a plurality of transmission occasions with the bundling relationship are used for a repetition of a same signal; and
a sending unit configured to send the bundling relationship to a UE(User Equipment) to enable the UE to determine a transmission occasion for a signal transmission based on the bundling relationship.

22. The transmission apparatus according to claim 21, further comprising:
a detection unit configured to perform a joint detection on signals received on the different transmission occasions with the bundling relationship;
a processing unit configured to scramble a scheduled RAR based on the result of the joint detection; and
wherein the sending unit sends a scrambled RAR(random access response) to the UE to enable the UE to determine whether the signal transmission of the UE is successful based on whether the scrambled RAR is able to be descrambled.

23. A signal transmission apparatus, comprising:
a receiving unit configured to receive a bundling relationship between different transmission occasions configured on a network side, wherein a plurality of transmission occasions with the bundling relationship are used for a repetition of a same signal; and
a transmitting unit configured to determine a transmission occasions for a signal transmission based on the bundling relationship.

24. The transmission apparatus according to claim 23, further comprising:
a processing unit configured to descramble a scrambled RAR(random access response) sent from the network side; and
a determination unit configured to determine whether the signal transmission is successful based on whether the scrambled RAR is able to be descrambled.

25. A signal transmission system, comprising:
a network side device configured to carry out a signal transmission method according to any one of claims 1 to 13; and
a UE (user equipment) configured to carry out a signal transmission method according to any one of claims 14 to 20.

26. A signal transmission apparatus, comprising:
a memory; and
a processor coupled to the memory, the processor configured to, based on instructions stored in the memory, carry out a signal transmission method according to any one of claims 1 to 13 or a signal transmission method according to any one of claims 14 to 20.

27. A non-volatile computer-readable storage medium stored thereon a computer program that, when executed by a processor, carries out a signal transmission method according to any one of claims 1 to 13 or a signal transmission method according to any one of claims 14 to 20.

28. A computer program, comprising:
instructions that, when executed by a processor, cause the processor to carry out a signal transmission method according to any one of claims 1 to 13 or a signal transmission method according to any one of claims 14 to 20.
